# EUROPÄISCHE PATENTSCHRIFT

(11) **EP 4 122 732 B1**
(45) Veröffentlichungstag und Bekanntmachung des Hinweises auf die Patenterteilung: **12.06.2024**
(21) Anmeldenummer: 22000180.4
(22) Anmeldetag: 08.07.2022
(51) Int. Cl.: B60J 10/70

(54) **FAHRZEUGSCHEIBENANORDNUNG UND TRANSPORTSCHUTZLEISTE ZUR VERWENDUNG BEI EINER FAHRZEUGSCHEIBENANORDNUNG**
VEHICLE WINDOW ARRANGEMENT AND TRANSPORT PROTECTION STRIP FOR USE IN A VEHICLE WINDOW ARRANGEMENT
AGENCEMENT DE VITRE DE VÉHICULE ET BAGUETTE DE PROTECTION DE TRANSPORT DESTINÉE À ÊTRE UTILISÉE DANS UN AGENCEMENT DE VITRE DE VÉHICULE

(30) Priorität: 22.07.2021 DE 102021119078
(43) Veröffentlichungstag der Anmeldung: 25.01.2023
(73) Patentinhaber: PMA/TOOLS AG, 47877 Willich (DE)
(72) Erfinder: Finkeldei, Jens, 41179 Mönchengladbach (DE)

(56) Entgegenhaltungen:
- DE-A1-102011 054 801
- DE-B3-102012 110 472
- US-B1- 7 870 958

## Beschreibung

Die Erfindung betrifft eine Fahrzeugscheibenanordnung, umfassend eine Fahrzeugscheibe, eine Profilleiste sowie eine Transportschutzleiste. Die Fahrzeugscheibe besitzt eine erste Hauptseite, eine der ersten Hauptseite abgewandte zweite Hauptseite und eine die erste Hauptseite mit der zweiten Hauptseite verbindende Kante. Die Profilleiste ist über einen ersten Verbindungsbereich an einem Randbereich der Fahrzeugscheibe angeordnet und weist einen zweiten Verbindungsbereich mit einer Aufnahmenut zur Verbindung mit einem der Fahrzeugscheibe benachbarten Bauteil auf. Die Transportschutzleiste ist mittels eines Einsteckabschnitts mit der Aufnahmenut der Profilleiste verbunden.

Zur Verbindung einer in einer Fahrzeugkarosserie montierten Fahrzeugscheibe mit einem benachbarten Bauteil, etwa einer Windschutzscheibe mit einer an die Scheibe angrenzenden Wasserkastenabdeckung, sind im Stand der Technik Profilleisten bekannt, die an einem Randbereich der Fahrzeugscheibe angeordnet werden. Die Befestigung erfolgt dabei häufig mittels eines zwischen einem Profilschenkel und der Scheibe angeordneten doppelseitigen Klebebands. Die Profilleiste wird zumeist bereits beim Scheibenhersteller an der Fahrzeugscheibe angebracht. Die Baugruppe aus Scheibe und Profilleiste wird dann zur Montage in eine Fahrzeugkarosserie an einen Produktions- oder Reparaturbetrieb geliefert. Dort wird nach erfolgter Montage anschließend eine Rastrippe des benachbarten Bauteils mit einer Aufnahmenut der Profilleiste gefügt.

Der Transport und die Lagerung der die Scheibe und die Profilleiste umfassenden Baugruppe erfolgen dabei in der Regel bei aufrecht stehender Scheibe, wobei die Scheibe mit einer mit der Profilleiste versehenen Scheibenkante auf einer Auflagefläche, beispielsweise einem Boden oder einem Träger eines Kartons oder eines Transportgestells aufsitzt. Um eine die spätere Montage des benachbarten Bauteils erschwerende Verformung der Aufnahmenut der Profilleiste durch das auf die Profilleiste wirkende Gewicht der Scheibe zu verhindern, wird vor Transport und Lagerung eine oft auch als Kederleiste bezeichnete Transportschutzleiste in die Aufnahmenut eingesetzt. Derartige Kederleisten sind beispielsweise aus der EP 1 763 446 A2, der DE 10 2012 110 472 B3, der EP 2 521 678 B1, der DE 10 2011 054 801 A1 oder der EP 2 253 556 A1 bekannt.

Die aus dem Stand der Technik bekannten Kederleisten haben sich im praktischen Gebrauch aus mehreren Gründen als unbefriedigend erwiesen. So kommt es bei aufrecht stehender Lagerung von Scheiben gelegentlich zu Problemen durch partielles Ablösen der Profilleiste von der Scheibe. Damit die Kederleisten sicher in der Aufnahmenut und/oder an der Profilleiste gehalten werden, müssen sie eigens auf eine bestimmte Profilleistengeometrie abgestimmt werden. Schließlich müssen zur Entfernung der Kederleisten häufig Werkzeuge verwendet werden. Die Kederleiste der DE 10 2011 054 801 A1 weist dazu eigens einen aus der Rastausnehmung der Profilleiste herausragenden Überstandsabschnitt mit einem Koppelbereich auf, welcher mit einem Werkzeug gegriffen werden kann. Alternativ können zur Kederentfernung Ausziehlaschen vorgesehen werden, die hergestellt, aufwändig zwischen Profilleiste und Kederleiste angeordnet und nach Verwendung entsorgt werden müssen.

Es ist daher Aufgabe der vorliegenden Erfindung, den Transport und die Lagerung von Scheiben zu verbessern, insbesondere im Hinblick auf den Schutz des Profils und/oder der Scheibe sowie hinsichtlich der Handhabung.

Diese Aufgabe wird bei einer Fahrzeugscheibenanordnung der eingangs genannten Art erfindungsgemäß dadurch gelöst, dass die Transportschutzleiste einen Kontaktabschnitt umfasst, welcher eine erste Hauptseite der Fahrzeugscheibe im Randbereich zumindest teilweise überdeckt und mittels eines zwischen dem Kontaktabschnitt und der ersten Hauptseite wirksamen Verbindungsmittels lösbar an der Fahrzeugscheibe befestigt ist.

Die erfindungsgemäße Fahrzeugscheibenanordnung sieht demnach in Abkehr vom Stand der Technik nicht nur eine lösbare Befestigung der Transportschutzleiste an der Profileiste vor, sondern sieht eine zusätzliche - und ebenfalls lösbare - Befestigung der Transportschutzleiste an der Fahrzeugscheibe vor, welche mittels eines von der Transportschutzleiste umfassten Kontaktabschnitts und mittels eines zwischen dem Kontaktabschnitt und der ersten Hauptseite der Scheibe wirksamen Verbindungsmittels realisiert wird.

Dies hat mehrere vorteilhafte Wirkungen. So wird der von der Fahrzeugscheibenanordnung gebildete Gesamtverbund aus Scheibe, Profilleiste und Transportschutzleiste erheblich stabilisiert, was einer Ablösung der Profilleiste von der Scheibe insbesondere bei Krafteinleitung in die Profilleiste unter ungünstigen Winkeln entgegenwirkt.

Die zusätzliche Befestigung zwischen Transportschutzleiste und Scheibe wirkt zudem auch einer Verlagerung, etwa einer Verkippung, des Einsteckabschnitts innerhalb der Aufnahmenut und/oder einem unbeabsichtigten Lösen des Einsteckabschnitts aus der Aufnahmenut entgegen. Der Einsteckabschnitt der Transportschutzleiste wird dadurch zusätzlich in der Aufnahmenut der Profilleiste gesichert, so dass ein sicherer Verbleib des Einsteckabschnitts in der Aufnahmenut gewährleistet ist. Dies gestattet es, bei der Herstellung der Transportschutzleiste mit größeren Toleranzen zu arbeiten und/oder eine Transportschutzleiste derart auszulegen, dass sie in Kombination mit verschiedenen, im Querschnitt unterschiedlich ausgebildeten Profilleisten und/oder Aufnahmenuten verwendbar ist, wodurch die logistische Flexibilität erhöht und Aufwand und Kosten gesenkt werden können.

Der die erste Hauptseite der Fahrzeugscheibe im Randbereich zumindest teilweise überdeckende Kontaktabschnitt bietet zusätzlich einen Schutz für den empfindlichen Kanten- oder Randbereich der Scheibe.

Der erste Verbindungsbereich der Profilleiste kann einen Befestigungsschenkel umfassen, der an dem Randbereich der Fahrzeugscheibe festgelegt ist. Wenn die Fahrzeugscheibe eine Verbundglasscheibe ist, kann der Befestigungsschenkel zwischen den zu einem Verbund laminierten Teilscheiben fixiert sein. Vorzugsweise ist der Befestigungsschenkel jedoch an der ersten Hauptseite der Scheibe festgelegt, insbesondere bevorzugt an der zweiten Hauptseite der Scheibe. Im letzteren Fall braucht der Kontaktabschnitt des Transportschutzprofils vor einem Kontakt mit der Scheibe nicht erst den Befestigungsschenkel der Profilleiste zu überbrücken, wodurch das Transportschutzprofil besonders kompakt ausgeführt werden kann. Zur Befestigung des Befestigungsschenkels an der Scheibe kann beispielsweise ein doppelseitiges Klebeband vorgesehen sein.

Der erste Verbindungsbereich kann auch im Querschnitt U-förmig ausgebildet sein und zwei Befestigungsschenkel umfassen, die die Scheibe im Randbereich gemeinsam umfassen, wobei ein Schenkel an der ersten Hauptseite und ein weiterer Schenkel an der zweiten Hauptseite anliegt, sodass der Randbereich der Fahrzeugscheibe zwischen den beiden Schenkeln aufgenommen ist und dort beispielsweise verklemmt und/oder verklebt sein kann.

Vorzugsweise bildet die erste Hauptseite in einem am Fahrzeug montierten Einbauzustand eine einem Fahrzeuginnenraum abgewandte Außenseite, während die zweite Hauptseite in dem Einbauzustand eine dem Fahrzeuginnenraum zugewandte Innenseite bildet. Dadurch ist der Kontaktabschnitt auf der im Einbauzustand äußeren Seite der Scheibe angeordnet und besonders einfach zugänglich, um das Transportschutzprofil vor der Montage des benachbarten Bauteils von der Profilleiste und der Scheibe zu entfernen.

Der Einsteckabschnitt wird in die Aufnahmenut eingesteckt und in der Aufnahmenut aufgenommen. Er kann kraft- und/oder formschlüssig mit der Aufnahmenut verbunden sein. Dazu können Abmessungen des Einsteckabschnitts derart auf Abmessungen der Aufnahmenut abgestimmt sein, dass der Einsteckabschnitt sich zumindest im Wesentlichen spielfrei mit der Aufnahmenut fügen lässt. Für eine stabilere Verbindung können die Querschnitte des Einsteckabschnitts und der Aufnahmenut auch zueinander korrespondierend mittels der Verwendung von Rastelementen ausgebildet sein.

Es hat sich als vorteilhaft herausgestellt, wenn sich der Einsteckabschnitt und der Kontaktabschnitt im Querschnitt gesehen im Wesentlichen quer zueinander erstrecken. Dadurch lässt sich eine Eintauchtiefe des Einsteckabschnitts in die Aufnahmenut begrenzen und/oder eine Verkippung des Einsteckabschnitts in der Aufnahmenut verhindern.

Erfindungsgemäß kann das Verbindungsmittel eine Klebemasse, einen Klebfolienstreifen, ein doppelseitiges Klebeband, einen Saugnapf und/oder ein Magnetelement umfassen. Die genannten Elemente können einzeln, mehrfach und/oder in Kombination miteinander vorgesehen sein. Ein Klebfolienstreifen kann vorzugsweise so ausgeführt sein, dass er sich durch dehnendes Verstrecken im Wesentlichen in der Verklebungsebene, d.h. parallel zu der betreffenden Hauptseite der Scheibe, rückstands- und zerstörungsfrei insbesondere von der Scheibe ablösen lässt. Vorteilhafterweise verbleibt das Verbindungsmittel nach der Entfernung der Transportschutzleiste von der Fahrzeugscheibe und der Profilleiste an der Transportschutzleiste. Im Fall eines doppelseitigen Klebebands ist dieses somit vorzugsweise derart auf die unterschiedlichen Klebeoberflächen abgestimmt, dass eine erste Adhäsionskraft zu der Scheibe geringer ist als eine zweite Adhäsionskraft zu dem Kontaktabschnitt, so dass das Klebeband beim Entfernen der Transportschutzleiste von der Scheibe an dem Kontaktabschnitt verbleibt.

Vorteilhafterweise lässt sich das Verbindungsmittel bei oder nach der Entfernung der Transportschutzleiste rückstandsfrei von der Scheibe ablösen, während es bei der Befestigung des Kontaktabschnitts der Transportschutzleiste am Randbereich der ersten Hauptseite der Fahrzeugscheibe einfach und schnell sowohl am Kontaktabschnitt als auch an der Fahrzeugscheibe zu befestigen ist und für eine vorgesehene Befestigungsdauer einen sicheren Halt des Kontaktabschnitts an der Fahrzeugscheibe gewährleistet.

Es ist vorteilhaft, wenn die Transportschutzleiste das Verbindungsmittel aufweist. Das Verbindungsmittel ist dann ein Bestandteil der Transportschutzleiste, das heißt es ist bereits an dem Kontaktabschnitt angeordnet, bevor die Transportschutzleiste verwendet wird. Dadurch kann der Kontaktabschnitt auf einfache Weise an der ersten Hauptseite der Fahrzeugscheibe befestigt werden, ohne dass zuvor ein Verbindungsmittel auf den Kontaktabschnitt oder auf einen zunächst geeignet zu ermittelnden Bereich der ersten Hauptseite der Scheibe aufgebracht oder an diesem angebracht werden muss.

Der Einsteckabschnitt und/oder der Kontaktabschnitt der Transportschutzleiste kann oder können entlang einer Längserstreckung der Transportschutzleiste segmentiert sein. Alternativ oder zusätzlich kann das Verbindungsmittel entlang der Längserstreckung der Transportschutzleiste segmentiert sein und/oder aus mehreren Fixierelementen gebildet sein. Unter Segmentierung eines Elements der Transportschutzleiste wird im Rahmen dieser Erfindung verstanden, dass das betrachtete Element in einer Längserstreckungsrichtung der Transportschutzleiste zueinander versetzt angeordnete Einschnitte, Lücken oder Unterbrechungen aufweist, so dass sich ein kammartiger Aufbau ergibt. Ein solcher Aufbau erleichtert eine Verformung der Transportschutzleiste und damit die Anpassung an eine Kontur des Randbereichs der Scheibe und an den an diese Kontur angepassten Verlauf der Profilleiste.

Es liegt auch im Rahmen der Erfindung, eine Transportschutzleiste vorzusehen, die kürzer ist als die an der Scheibe angeordnete Profilleiste und beispielsweise an einer Stelle angeordnet ist, die bei Lagerung und Transport der aufrecht stehenden Fahrzeugscheibenanordnung in Kontakt mit einem Boden oder einem Träger des Lager- oder Transportbehälters kommt. Ebenso können zwei oder mehr entlang der Längserstreckungsrichtung der Profilleiste zueinander versetzt angeordnete Transportschutzleisten vorgesehen werden, die auch als Transportschutzleistensegmente bezeichnet werden können. Dies kann - in Entsprechung der vorstehend erläuterten Segmentierung einzelner (im Querschnitt betrachteter) Abschnitte oder Elemente der Transportschutzleiste, wobei die Transportschutzleiste in Längserstreckungsrichtung immer noch kontinuierlich ist - als Segmentierung der (im Querschnitt gesehen) gesamten Transportschutzleiste betrachtet werden.

Die Transportschutzleiste kann einen den Einsteckabschnitt umfassenden ersten Leistenabschnitt und einen den Kontaktabschnitt umfassenden zweiten Leistenabschnitt umfassen, wobei der erste Leistenabschnitt mit dem zweiten Leistenabschnitt gefügt ist. Die Leistenabschnitte können durch Kleben, Schweißen, Verrasten, Klammern, Klemmen oder dergleichen miteinander lösbar oder unlösbar gefügt sein. Die Leistenabschnitte können aus identischen oder aus unterschiedlichen Materialien bestehen, bspw. aus PE (Polyethylen), PP (Polypropylen), PVC (Polyvinylchlorid), PS (Polystyrol), Polyester oder PC (Polycarbonat). Der erste Leistenabschnitt ist vorzugsweise durch einen extrudierten Profilstrang gebildet. Der zweite Leistenabschnitt kann einen extrudierten Profilstrang umfassen, der adhäsiv mit dem ersten Leistenabschnitt und mit der Hauptseite der Scheibe verbunden ist. Der zweite Leistenabschnitt kann alternativ ein (einseitiges) Klebeband umfassen, welches adhäsiv mit dem ersten Leistenabschnitt und mit der Hauptseite der Scheibe verbunden ist.

Nach einer weiteren Ausführungsform der Erfindung weist die Transportschutzleiste einen Stützabschnitt auf. Der Stützabschnitt erstreckt sich im Querschnitt gesehen in einer zu dem Kontaktabschnitt und/oder der ersten Hauptseite der Fahrzeugscheibe im Wesentlichen parallelen und in Bezug auf den Einsteckabschnitt von dem Kontaktabschnitt abgewandten Richtung. Insbesondere überragt der Stützabschnitt den zweiten Verbindungsbereich der Profilleiste in einer Projektion auf eine zu einer Längserstreckungsrichtung der Transportschutzleiste orthogonale und zu der ersten Hauptseite der Fahrzeugscheibe um betragsmäßig höchstens 40°, bevorzugt betragsmäßig höchstens 35°, besonders bevorzugt betragsmäßig höchstens 30° geneigte Projektionslinie. Damit ist der Stützabschnitt benachbart zu dem zweiten Verbindungsbereich der Profilleiste angeordnet und kann als Auflageelement dienen, welches bei aufrecht stehender Scheibe auf einer Auflagefläche, etwa einem Boden oder Träger eines Transport- oder Lagerbehälters, aufsitzt und gemeinsam mit dem zweiten Verbindungsbereich, bevorzugt im Wesentlichen allein, das Gewicht der Fahrzeugscheibenanordnung trägt. Dadurch können Beschädigungen an der Profilleiste vermieden werden.

Der Stützabschnitt kann den zweiten Verbindungsbereich auf einer der Kante der Fahrzeugscheibe abgewandten Seite des zweiten Verbindungsbereichs zumindest teilweise umgreifen und/oder überdecken. Damit wird die Profilleiste während des Transports und der Lagerung noch zuverlässiger geschützt.

Die in der vorstehenden Beschreibung der Erfindung und in der nachfolgenden Beschreibung von Ausführungsbeispielen erläuterten "Abschnitte", "Bereiche" und sonstigen Elemente und Merkmale der Profilleiste und der Transportschutzleiste beziehen sich - soweit nichts Gegenteiliges angegeben ist - jeweils auf einen senkrecht zu einer Längserstreckungsrichtung der Profilleiste beziehungsweise senkrecht zu einer Längserstreckungsrichtung der Transportschutzleiste anliegenden Querschnitt. Beide Leisten können jeweils vorteilhaft in einem Extrusionsverfahren hergestellt werden. Die Längserstreckungsrichtung entspricht dann der Extrusionsrichtung.

Unter "aufrecht stehend" soll im Rahmen dieser Erfindung verstanden werden, dass die Scheibe derart orientiert ist, dass sie zumindest im Wesentlichen austariert ist, dass also ein möglichst geringes Kippmoment auf die Scheibe wirkt. Im einfachsten Fall einer planaren Scheibe bedeutet dies (im engeren Sinne) eine Orientierung, bei der eine obere Kante der Scheibe lotrecht über einer unteren Kante der Scheibe angeordnet ist (gleichbedeutend mit der Aussage, dass die Scheibe bzw. die erste Hauptseite der Scheibe senkrecht zu einer horizontalen Auflagefläche orientiert ist). Im weiteren Sinne sollen auch um ± 45° davon abweichende Orientierungen als aufrecht stehend gelten. Im Fall einer gewölbten Scheiben soll "aufrecht stehend" so verstanden werden, dass die Scheibe auf einer Kante ruht und eine Orientierung aufweist, die um höchstens ± 45° von einer kippmomentfreien Orientierung abweicht. Dabei kann die kippmomentfreie Orientierung je nach Form der Scheibe und Ausmaß der Scheibenwölbung damit einhergehen, dass eine (etwa die im Einbauzustand in Fahrzeug- und Fahrtrichtung obere/hintere) Kante der Windschutzscheibe zumindest im Wesentlichen lotrecht über einer anderen (etwa der im Einbauzustand in Fahrzeug- und Fahrtrichtung unteren/vorderen) Scheibenkante angeordnet ist.

Bei der Definition von Richtungen, Orientierungen oder Winkeln, die mit Bezug auf eine Hauptseite der Scheibe angegeben werden, soll die Orientierung der Hauptseite in einem von der Profilleiste beziehungsweise der Transportschutzleiste nicht zu weit entfernten Bereich, vorzugsweise in dem Randbereich der Scheibe, herangezogen werden.

Weitere Vorteile und Merkmale der Erfindung ergeben sich auch aus der nachfolgenden Beschreibung von Ausführungsbeispielen und den Zeichnungen.

Es zeigen:
Fig. 1 in einer Draufsicht eine Fahrzeugscheibenanordnung mit einer Fahrzeugscheibe, einer Profilleiste und einer Transportschutzleiste;
Fig. 2 eine Schnittansicht einer Fahrzeugscheibenanordnung nach einer Ausführungsform der Erfindung;
Fig. 3 eine Schnittansicht einer Fahrzeugscheibenanordnung nach einer weiteren Ausführungsform der Erfindung;
Fig. 4 eine Fahrzeugscheibenanordnung nach einer weiteren Ausführungsform der Erfindung;
Fig. 5 eine Fahrzeugscheibenanordnung nach einer weiteren Ausführungsform der Erfindung.

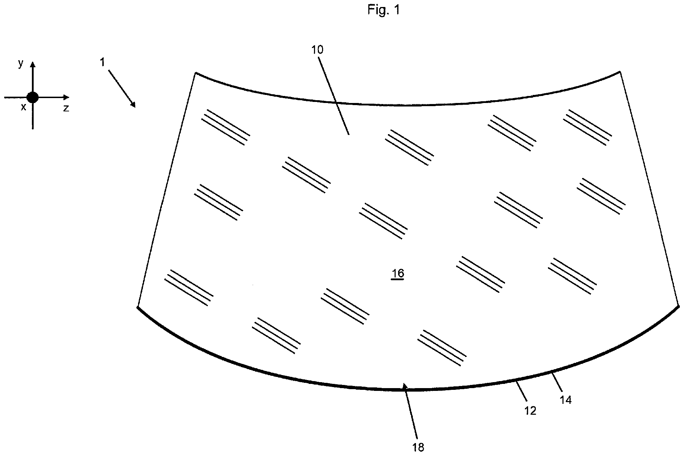

Fig. 1 zeigt eine erfindungsgemäße Fahrzeugscheibenanordnung 1 mit einer Fahrzeugscheibe 10, einer Profilleiste 12 und einer Transportschutzleiste 14. Bei der in einer Draufsicht auf eine erste Hauptseite 16 dargestellten Fahrzeugscheibe 10 handelt es sich insbesondere um eine Windschutzscheibe für ein Kraftfahrzeug. An einem unteren Randbereich 18 der Fahrzeugscheibe 10 sind die Profilleiste 12 und die Transportschutzleiste 14 festgelegt, die sich im dargestellten Beispiel jeweils im Wesentlichen über die Breite der Fahrzeugscheibe 10 erstrecken.

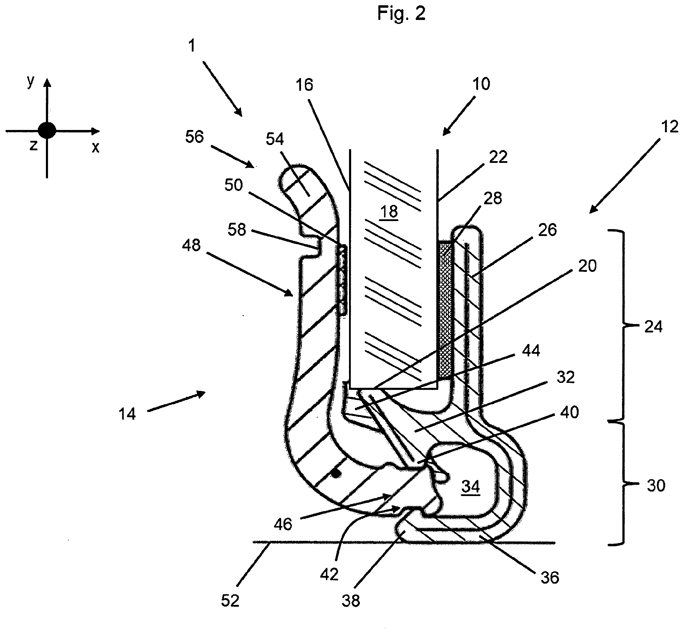

In der Fig. 1 und in den nachfolgenden Figuren 2 bis 5 ist zur Orientierung jeweils ein Koordinatensystem eingeblendet. Die x-Achse ist im Wesentlichen senkrecht zu der ersten Hauptseite 16 der Scheibe 10 ausgerichtet. Die y-Achse ist im Wesentlichen parallel zu der Hauptseite 16 und im Wesentlichen senkrecht zu einer Kante 20 (siehe Fig. 2) der Scheibe 10 ausgerichtet. Die z-Achse ist senkrecht zur x-Achse und senkrecht zur y-Achse und somit im Wesentlichen parallel zu einer Längserstreckungsrichtung der Profilleiste 12 und im Wesentlichen parallel zu einer Längserstreckungsrichtung der Transportschutzleiste 14 ausgerichtet. Die Scheibe 10 kann eine 2D- oder eine 3D-Wölbung aufweisen, und die Längserstreckungsrichtungen können gekrümmt sein.

Die Figuren 2 bis 5 zeigen unterschiedliche Ausführungsformen der erfindungsgemäßen Fahrzeugscheibenanordnung 1 und der Transportschutzleiste 14 jeweils in einem senkrecht zu den Längserstreckungsrichtungen der Profilleiste 12 und der Transportschutzleiste 14 (das heißt senkrecht zur z-Achse) anliegenden Querschnitt. Die Beschreibung der Figuren 2 bis 5 erfolgt zunächst gemeinsam, wobei identische oder funktionsgleiche Elemente jeweils mit identischen Bezugszeichen versehen sind. Auf Unterschiede wird weiter unten unter Bezug auf die jeweiligen Figuren eingegangen.

Die in den Figuren 2 bis 5 dargestellte Fahrzeugscheibe 10 weist eine erste Hauptseite 16, eine der ersten Hauptseite 16 abgewandte zweite Hauptseite 22 und eine die erste Hauptseite 16 mit der zweiten Hauptseite 22 verbindende Kante 20 auf.

Die Profilleiste 12 hat einen ersten Verbindungsbereich 24, der einen Befestigungsschenkel 26 umfasst, welcher mittels eines doppelseitigen Klebebands 28 in dem Randbereich 18 an der zweiten Hauptseite 22 der Scheibe 10 festgelegt ist. In einem Übergangsbereich von dem ersten Verbindungsbereich 24 zu einem zweiten Verbindungsbereich 30 ist ein Basisschenkel 32 angeordnet, der an der Kante 20 der Scheibe 10 anliegt und zusammen mit dem Befestigungsschenkel 26 eine etwa L-förmige Aufnahme für den Randbereich 18 der Scheibe 10 bildet. In einem an dem Kraftfahrzeug montierten Einbauzustand bildet die erste Hauptseite 16 eine dem Fahrzeuginnenraum abgewandte Außenseite, während die zweite Hauptseite 22 eine dem Fahrzeuginnenraum zugewandte Innenseite der Fahrzeugscheibe 10 bildet.

Der zweite Verbindungsbereich 30 der Profilleiste 12 weist eine im Wesentlichen U- oder V-förmige Aufnahmenut 34 auf zur (späteren) lösbaren Verbindung der Fahrzeugscheibe 10 mit einem der Fahrzeugscheibe 10 benachbarten Bauteil, beispielsweise einer Wasserkastenabdeckung. Die Aufnahmenut 34 ist zwischen einem Federschenkel 36 und dem Basisschenkel 32 gebildet. Ein freies Ende 38 des Federschenkels 36 sowie ein freies Ende 40 des Basisschenkels 32, das sich zum Federschenkel 36 hin erstreckt, begrenzen eine Aufnahmeöffnung 42 für eine an dem benachbarten Bauteil vorgesehene Befestigungsrippe. An dem Basisschenkel 32 ist ein Dichtelement 44 in Form einer Dichtlippe angeordnet, das an der Kante 20 der Fahrzeugscheibe 10 anliegt.

Die Transportschutzleiste 14 umfasst einen Einsteckabschnitt 46, der in der Aufnahmenut 34 der Profilleiste 12 aufgenommen und lösbar mit dieser gefügt ist. Die Transportschutzleiste 14 umfasst ferner einen Kontaktabschnitt 48, der mittels eines Verbindungsmittels 50 in Form eines doppelseitigen Klebebands oder eines Klebfolienstreifens lösbar mit der ersten Hauptseite 16 der Scheibe 10 verbunden ist und die erste Hauptseite 16 im Randbereich 18 der Scheibe 10 überdeckt.

In den Figuren 2 bis 5 ist jeweils eine Auflagefläche 52 angedeutet, bei der es sich beispielsweise um einen Träger eines Scheibengestells oder um einen Boden eines Kartons handeln kann. Die Fahrzeugscheibenanordnung 1 ist, in grober Entsprechung der typischen Lager- und Transportsituation, jeweils aufrecht stehend dargestellt und sitzt mit der Profilleiste 12 und/oder der Transportschutzleiste 14 auf der Auflagefläche 52 auf. In dieser Situation stabilisiert der Einsteckabschnitt 46 der Transportschutzleiste 14 die Aufnahmenut 34 der Profilleiste 12 und begrenzt oder verhindert eine Deformation des Federschenkels 36, die zu einer für eine spätere Montage des benachbarten Bauteils hinderlichen Verengung der Aufnahmeöffnung 42 führen würde.

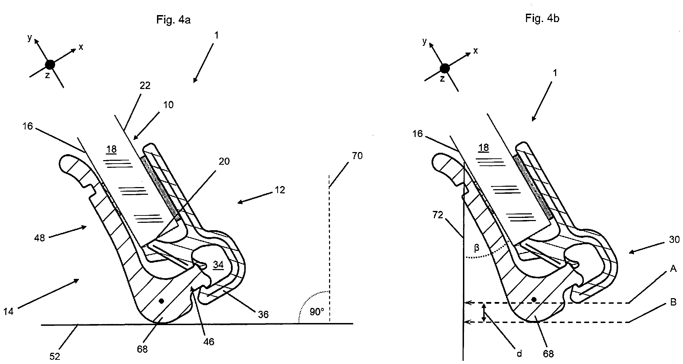

Die Transportschutzleiste 14 ist über ihren Einsteckabschnitt 46 mit der Profilleiste 12 und zugleich über ihren Kontaktabschnitt 48 und das Verbindungsmittel 50 mit der Fahrzeugscheibe 10 verbunden, was dem Gesamtverbund aus Scheibe 10, Profilleiste 12 und Transportschutzleiste 14 eine hohe Stabilität verleiht. Auch bei ungünstigen Winkeln zwischen dem Randbereich 18 der Scheibe 10 und der Auflagefläche 52, die insbesondere bei gewölbten Scheiben häufig vorliegen, wird so einem Abscheren oder Ablösen der Profilleiste 12 von der Scheibe 10 entgegengewirkt (vergleiche dazu Fig. 4 und die nachfolgende Beschreibung zu Fig. 4).

Der Kontaktabschnitt 48 weist an seinem freien Ende 54 einen geschwungenen Handhabungsabschnitt 56 auf, welcher manuell oder mit einem Werkzeug gegriffen werden kann, um den Kontaktabschnitt 48 von der Scheibe 10 und anschließend das Transportschutzprofil 14 von der Profilleiste 12 zu entfernen. An dem Kontaktabschnitt 48 ist eine Materialverdünnung in Form einer auf der von der Hauptseite 16 abgewandten Seite und etwa auf Höhe eines oberen Endes des Klebebands 50 vorgesehenen Ausnehmung 58 vorgesehen. Dadurch ist der Handhabungsabschnitt 56 nach dem Ergreifen leicht in eine für die weitere Handhabung günstige Stellung biegbar, noch bevor die Klebeverbindung zwischen dem Kontaktabschnitt 48 und der ersten Hauptseite 16 gelöst wird.

In der Ausführungsform gemäß Fig. 2 umfasst die Fahrzeugscheibenanordnung 1 eine einstückig ausgebildete Transportschutzleiste 14 mit einem im Wesentlichen L-förmigen Querschnitt. Der Kontaktabschnitt 48 und der Einsteckabschnitt 46 der Transportschutzleiste 14 erstrecken sich quer, im Wesentlichen senkrecht, zueinander. Als Verbindungsmittel 50 ist ein doppelseitiges Klebeband vorgesehen.

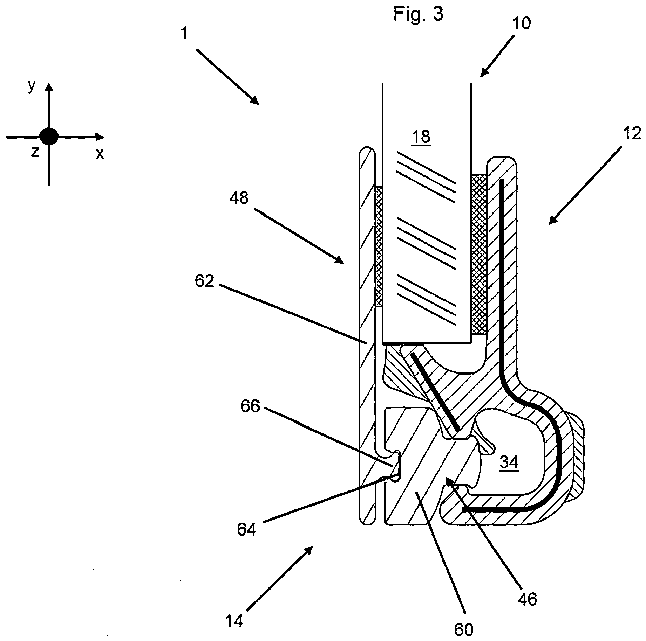

In der Ausführungsform gemäß Fig. 3 ist die Transportschutzleiste 14 aus zwei Leistenabschnitten 60, 62 gebildet. Der erste Leistenabschnitt 60 umfasst den Einsteckabschnitt 46, und der zweite Leistenabschnitt 62 umfasst den Kontaktabschnitt 48. Der erste Leistenabschnitt 60 weist eine dem zweiten Leistenabschnitt 62 zugewandte, hinterschnittene Nut 64 auf, und der zweite Leistenabschnitt 62 weist einen dem ersten Leistenabschnitt 60 zugewandten Rastfortsatz 66 auf, welcher formschlüssig und bei Bedarf lösbar mit der Nut 64 gefügt ist. Die Leistenabschnitte 60, 62 sind jeweils im Extrusionsverfahren hergestellt und können nach ihrer Herstellung wahlweise zunächst getrennt voneinander oder im bereits miteinander gefügten Zustand vorgehalten und gehandhabt werden.

In der Ausführungsform gemäß den Figuren 4a und 4b umfasst die Transportschutzleiste 14 einen Stützabschnitt 68, der sich in einer zu dem Kontaktabschnitt 48 und der ersten Hauptseite 16 der Fahrzeugscheibe 10 im Wesentlichen parallelen und in Bezug auf den Einsteckabschnitt 46 von dem Kontaktabschnitt 48 abgewandten Richtung erstreckt (mit anderen Worten: im Wesentlichen in negativer y-Richtung). Figuren 4a und 4b zeigen jeweils einen unteren Bereich der Fahrzeugscheibenanordnung 1 in einer gegenüber einer Normalen 70 auf der Auflagefläche 52 um ungefähr 30° geneigten Orientierung, gleichbedeutend damit, dass die erste Hauptseite 16 im Bereich des Randbereichs 18 mit der Auflagefläche 52 einen Winkel von ungefähr 60° einschließt. Derartige Winkel treten im Randbereich 18 der Scheibe 10 beispielsweise bei gewölbten Windschutzscheiben mit konvexer erster Hauptseite 16 (Außenseite) und konkaver zweiter Hauptseite 22 (Innenseite) auf, die im Sinne des vorstehend erläuterten Verständnisses aufrecht stehend gelagert und transportiert werden.

In Fig. 4b ist eine Projektion des zweiten Verbindungsbereichs 30 auf eine zu der Längserstreckungsrichtung der Transportschutzleiste 14 orthogonale und zu der ersten Hauptseite 16 der Fahrzeugscheibe 10 um einen Winkel β geneigte Projektionslinie 72 mit einem ersten Projektionsstrahl A angedeutet. Eine Projektion des Stützabschnitts 68 auf die Projektionslinie 72 ist mit einem zweiten Projektionsstrahl B angedeutet. In der Projektion überragt der Stützabschnitt 68 den zweiten Verbindungsbereich 30 um ein mit einem Doppelpfeil angedeutetes Abstandsmaß d. Dadurch sitzt die Fahrzeugscheibenanordnung 1 nur mit der Transportschutzleiste 14 auf der Auflagefläche 52 auf, während der Federschenkel 36 bezüglich der Gewichtskraft der Anordnung 1 im Wesentlichen kräftefrei ist (vgl. Fig. 4a).

Der Winkel β ist gewissermaßen ein Gegenwinkel des zwischen der ersten Hauptseite 16 und der Normalen 70 eingeschlossenen Winkels (vgl. Fig. 4a) und beträgt in der in Fig. 4b dargestellten Situation damit ebenfalls ungefähr 30°.

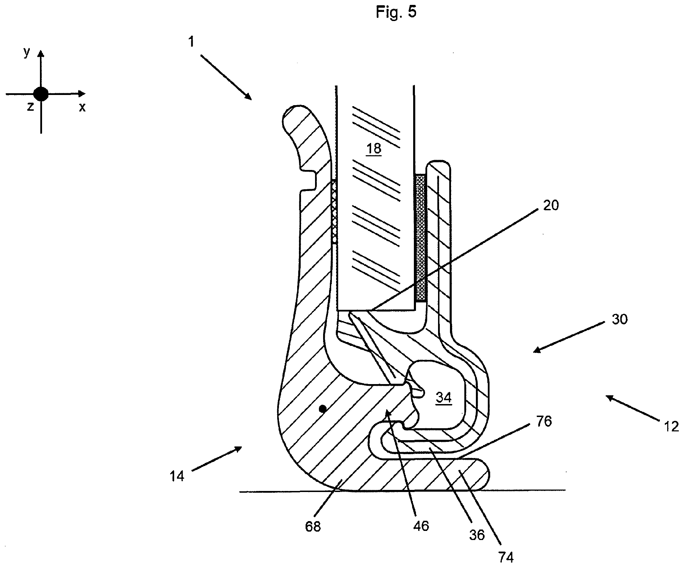

In der in Fig. 5 dargestellten Fahrzeugscheibenanordnung 1 umfasst der Stützabschnitt 68 der Transportschutzleiste 14 einen Schutzschenkel 74, der im Wesentlichen parallel zu dem Einsteckabschnitt 46 ausgerichtet ist und den zweiten Verbindungsbereich 30 der Profilleiste 12 auf der der Kante 20 abgewandten Seite des Verbindungsbereichs 30 umgreift und/oder überdeckt und dadurch den Federschenkel 36 zusätzlich schützt. Zur einfachen Verbindung des Einsteckabschnitts 46 mit der Aufnahmenut 34 ist eine dem Einsteckabschnitt 46 zugewandte Oberseite 76 des Schutzschenkels 74 derart von dem Einsteckabschnitt 46 beabstandet, dass der Federschenkel 36 nicht in Kontakt mit der Oberseite 76 des Schutzschenkels 74 kommt.

Bei den Ausführungsformen gemäß den Figuren 4 und 5 kann eine Entfernung der Transportschutzleiste 14 auf die vorstehend unter Bezug auf Fig. 2 beschriebene Weise erfolgen. Alternativ kann eine Entfernung auch durch Greifen oder Hintergreifen des über den zweiten Verbindungsbereichs 30 der Profilleiste 12 überstehenden Stützabschnitts 68 der Transportschutzleiste 14 erfolgen. Es versteht sich, dass auch bei zweiteilig ausgebildeter Transportschutzleiste 14 (vgl. Fig. 3) ein Handhabungsabschnitt 56 am Kontaktabschnitt 48 und/oder ein Stützabschnitt 68 an der Transportschutzleiste 14 vorgesehen werden kann oder können, womit die vorstehend unter Bezug auf die Figuren 2, 4 und 5 erläuterten jeweiligen Vorteile und Möglichkeiten einhergehen.

### Bezugszeichenliste

- 1: Fahrzeugscheibenanordnung
- 10: Fahrzeugscheibe
- 12: Profilleiste
- 14: Transportschutzleiste
- 16: erste Hauptseite Fahrzeugscheibe
- 18: (unterer) Randbereich Fahrzeugscheibe
- 20: Kante Fahrzeugscheibe
- 22: zweite Hauptseite Fahrzeugscheibe
- 24: erster Verbindungsbereich Profilleiste
- 26: Befestigungsschenkel
- 28: doppelseitiges Klebeband
- 30: zweiter Verbindungsbereich Profilleiste
- 32: Basisschenkel
- 34: Aufnahmenut
- 36: Federschenkel
- 38: freies Ende (Federschenkel)
- 40: freies Ende (Basisschenkel)
- 42: Aufnahmeöffnung
- 44: Dichtelement
- 46: Einsteckabschnitt Transportschutzleiste
- 48: Kontaktabschnitt Transportschutzleiste
- 50: Verbindungsmittel
- 52: Auflagefläche
- 54: freies Ende (Kontaktabschnitt)
- 56: Handhabungsabschnitt
- 58: Ausnehmung
- 60: erster Leistenabschnitt, umfassend Einsteckabschnitt
- 62: zweiter Leistenabschnitt, umfassend Kontaktabschnitt
- 64: Nut
- 66: Rastfortsatz
- 68: Stützabschnitt der Transportschutzleiste
- 70: Normale auf Auflagefläche
- 72: Projektionslinie
- 74: Schutzschenkel (Stützabschnitt)
- 76: Oberseite Schutzschenkel
- A: erster Projektionsstrahl
- B: zweiter Projektionsstrahl
- d: Abstandsmaß
- β: Winkel

## Patentansprüche

1. Fahrzeugscheibenanordnung (1), umfassend
eine Fahrzeugscheibe (10) mit einer ersten Hauptseite (16), einer der ersten Hauptseite (16) abgewandten zweiten Hauptseite (22) und einer die erste Hauptseite (16) mit der zweiten Hauptseite (22) verbindenden Kante (20),
eine Profilleiste (12), die mittels eines ersten Verbindungsbereichs (24) an einem Randbereich (18) der Fahrzeugscheibe (10) angeordnet ist und einen zweiten Verbindungsbereich (30) mit einer Aufnahmenut (34) zur Verbindung mit einem der Fahrzeugscheibe (10) benachbarten Bauteil aufweist, sowie eine Transportschutzleiste (14), umfassend einen Einsteckabschnitt (46), der in der Aufnahmenut (34) aufgenommen und lösbar mit dieser verbunden ist, **dadurch gekennzeichnet, dass** die Transportschutzleiste (14) einen Kontaktabschnitt (48) umfasst, welcher die erste Hauptseite (16) der Fahrzeugscheibe (10) im Randbereich (18) zumindest teilweise überdeckt und mittels eines zwischen dem Kontaktabschnitt (48) und der ersten Hauptseite (16) wirksamen Verbindungsmittels (50) lösbar an der Fahrzeugscheibe (10) befestigt ist.

2. Fahrzeugscheibenanordnung (1) nach Anspruch 1, **dadurch gekennzeichnet, dass** der erste Verbindungsbereich (24) mindestens einen Befestigungsschenkel (26) umfasst, der an dem Randbereich (18) der Fahrzeugscheibe (10), bevorzugt an der ersten Hauptseite (16), insbesondere bevorzugt an der zweiten Hauptseite (22), festgelegt ist.

3. Fahrzeugscheibenanordnung (1) nach Anspruch 1 oder 2, **dadurch gekennzeichnet, dass** die erste Hauptseite (16) in einem am Fahrzeug montierten Einbauzustand eine Außenseite bildet und dass die zweite Hauptseite (22) in dem Einbauzustand eine Innenseite bildet.

4. Fahrzeugscheibenanordnung (1) nach einem der vorhergehenden Ansprüche, **dadurch gekennzeichnet, dass** der Einsteckabschnitt (46) kraft- und/oder formschlüssig mit der Aufnahmenut (34) verbunden ist.

5. Fahrzeugscheibenanordnung (1) nach einem der vorhergehenden Ansprüche,
**dadurch gekennzeichnet, dass**, in einem senkrecht zu einer Längserstreckungsrichtung der Transportschutzleiste (14) anliegenden Querschnitt gesehen, der Einsteckabschnitt (46) und der Kontaktabschnitt (48) sich im Wesentlichen quer zueinander erstrecken.

6. Fahrzeugscheibenanordnung (1) nach einem der vorhergehenden Ansprüche,
**dadurch gekennzeichnet, dass** das Verbindungsmittel (50) eine Klebemasse, einen Klebfolienstreifen, ein doppelseitiges Klebeband, einen Saugnapf und/oder ein Magnetelement umfasst.

7. Fahrzeugscheibenanordnung (1) nach einem der vorhergehenden Ansprüche,
**dadurch gekennzeichnet, dass** die Transportschutzleiste (14) das Verbindungsmittel (50) aufweist.

8. Fahrzeugscheibenanordnung (1) nach einem der vorhergehenden Ansprüche,
**dadurch gekennzeichnet, dass** der Einsteckabschnitt (46) und/oder der Kontaktabschnitt (48) entlang einer Längserstreckung der Transportschutzleiste (14) segmentiert ist oder sind und/oder dass das Verbindungsmittel (50) entlang der Längserstreckung der Transportschutzleiste (14) segmentiert ist und/oder aus mehreren Fixierelementen gebildet ist.

9. Fahrzeugscheibenanordnung (1) nach einem der vorhergehenden Ansprüche,
**dadurch gekennzeichnet, dass** die Transportschutzleiste (14) einen den Einsteckabschnitt (46) umfassenden ersten Leistenabschnitt (60) und einen den Kontaktabschnitt (48) umfassenden zweiten Leistenabschnitt (62) umfasst, wobei der erste Leistenabschnitt (60) mit dem zweiten Leistenabschnitt (62) gefügt ist.

10. Fahrzeugscheibenanordnung (1) nach einem der vorhergehenden Ansprüche bei Rückbezug zumindest auf Anspruch 5, **dadurch gekennzeichnet, dass** die Transportschutzleiste (14) einen Stützabschnitt (68) aufweist, der sich, im Querschnitt gesehen, in einer zu dem Kontaktabschnitt (48) und/oder der ersten Hauptseite (16) der Fahrzeugscheibe (10) im Wesentlichen parallelen und in Bezug auf den Einsteckabschnitt (46) von dem Kontaktabschnitt (48) abgewandten Richtung erstreckt.

11. Fahrzeugscheibenanordnung (1) nach Anspruch 10, **dadurch gekennzeichnet, dass** der Stützabschnitt (68) der Transportschutzleiste (14) den zweiten Verbindungsbereich (30) der Profilleiste (12) in einer Projektion auf eine zu der Längserstreckungsrichtung der Transportschutzleiste (14) orthogonale und zu der ersten Hauptseite der Fahrzeugscheibe um einen Winkel (β) geneigte Projektionslinie (72) überragt, wobei der Winkel (β) betragsmäßig kleiner oder gleich 40° ist.

12. Fahrzeugscheibenanordnung (1) nach einem der Ansprüche 10 oder 11, **dadurch gekennzeichnet, dass** der Stützabschnitt (68) den zweiten Verbindungsbereich (30) auf einer der Kante (20) der Fahrzeugscheibe (10) abgewandten Seite des zweiten Verbindungsbereichs (30) zumindest teilweise umgreift und/oder überdeckt.

## Claims

1. A vehicle window assembly (1), comprising
a vehicle window (10) comprising a first main face (16), a second main face (22) facing away from the first main face (16), and an edge (20) connecting the first main face (16) to the second main face (22),
a profile strip (12) which is arranged at a peripheral region (18) of the vehicle window (10) by means of a first connecting region (24), and which has a second connecting region (30) comprising a receiving groove (34) for connection to a component adjacent to the vehicle window (10), and
a transport protection strip (14), comprising an insertion portion (46) which is received in, and releasably connected to, the receiving groove (34), **characterized in that** the transport protection strip (14) comprises a contact portion (48) which at least partially overlaps the first main face (16) of the vehicle window (10) in the peripheral region (18) and is releasably connected to the vehicle window (10) by means of a connecting means (50) acting between the contact portion (48) and the first main face (16).

2. The vehicle window assembly (1) according to claim 1, **characterized in that** the first connecting region (24) comprises at least one fastening leg (26) which is fixed to the peripheral region (18) of the vehicle window (10), preferably on the first main face (16), particularly preferably on the second main face (22).

3. The vehicle window assembly (1) according to claim 1 or 2, **characterized in that** the first main face (16) forms an outer side in an installed state on the vehicle, and the second main face (22) forms an inner side in the installed state.

4. The Vehicle window assembly (1) according to any one of the preceding claims, **characterized in that** the insertion portion (46) is connected to the receiving groove (34) in a frictional and/or interlocking manner.

5. The vehicle window assembly (1) according to any one of the preceding claims, **characterized in that**, as seen in a cross-section perpendicular to a longitudinal extension direction of the transport protection strip (14), the insertion portion (46) and the contact portion (48) extend in directions substantially transverse to one another.

6. The vehicle window assembly (1) according to any one of the preceding claims, **characterized in that** the connecting means (50) comprises an adhesive, an adhesive film strip, a double-sided adhesive tape, a suction cup and/or a magnetic element.

7. The vehicle window assembly (1) according to any one of the preceding claims, **characterized in that** the transport protection strip (14) comprises the connecting means (50).

8. The vehicle window assembly (1) according to any one of the preceding claims, **characterized in that** the insertion portion (46) and/or the contact portion (48) of the transport protection strip (14) is or are segmented along a longitudinal extension of the transport protection strip (14) and/or that the connecting means (50) is segmented along the longitudinal extension of the transport protection strip (14) and/or is formed of a plurality of fixing elements.

9. The vehicle window assembly (1) according to any one of the preceding claims, **characterized in that** the transport protection strip (14) comprises a first strip portion (60) comprising the insertion portion (46) and a second strip portion (62) comprising the contact portion (48), wherein the first strip portion (60) is joined to the second strip portion (62).

10. The vehicle window assembly (1) according to any one of the preceding claims and including at least claim 5, **characterized in that** the transport protection strip (14) has a support portion (68) which extends, as seen in the cross-section, in a direction essentially parallel to the contact portion (48) and/or the first main face (16) of the vehicle window (10) and, with respect to the insertion portion (46), facing away from the contact portion.

11. The vehicle window assembly (1) according to claim 10, **characterized in that** the support portion (68) of the transport protection strip (14) projects beyond the second connecting region (30) of the profile strip (12) in a projection onto a projection line (72) orthogonal to the longitudinal extension direction of the transport protection strip (14) and inclined with respect to the first main face of the vehicle window by an angle (β), the angle (β) having an absolute value equal to or smaller than 40°.

12. The vehicle window assembly (1) according to any one of claims 10 or 11, **characterized in that** the support portion (68) at least partially embraces and/or overlaps the second connecting region (30) on a side of the second connecting region (30) facing away from the edge (20) of the vehicle window (10).

## Revendications

1. Agencement de vitre de véhicule (1), comprenant
une vitre de véhicule (10) avec un premier côté principal (16), un deuxième côté principal (22) détourné du premier côté principal (16) et un bord (20) reliant le premier côté principal (16) au deuxième côté principal (22),
une baguette profilée (12) qui est agencée au moyen d'une première zone de liaison (24) sur une zone de bord (18) de la vitre de véhicule (10) et qui présente une deuxième zone de liaison (30) avec une rainure de réception (34) pour la liaison à un composant voisin de la vitre de véhicule (10), ainsi qu'une baguette de protection pour le transport (14), comprenant une section d'insertion (46), qui est reçue dans la rainure de réception (34) et est reliée de manière amovible à celle-ci,
**caractérisé en ce que** la baguette de protection pour le transport (14) comprend une section de contact (48), qui recouvre au moins partiellement le premier côté principal (16) de la vitre de véhicule (10) dans la zone de bord (18) et est fixée de manière amovible à la vitre de véhicule (10) au moyen d'un moyen de liaison (50) agissant entre la section de contact (48) et le premier côté principal (16).

2. Agencement de vitre de véhicule (1) selon la revendication 1, **caractérisé en ce que** la première zone de liaison (24) comprend au moins une branche de fixation (26) qui est immobilisée sur la zone de bord (18) de la vitre de véhicule (10), de préférence sur le premier côté principal (16), de manière particulièrement préférée sur le deuxième côté principal (22).

3. Agencement de vitre de véhicule (1) selon la revendication 1 ou 2, **caractérisé en ce que** le premier côté principal (16) forme un côté extérieur dans un état de montage monté sur le véhicule et **en ce que** le deuxième côté principal (22) forme un côté intérieur dans l'état de montage.

4. Agencement de vitre de véhicule (1) selon l'une quelconque des revendications précédentes, **caractérisé en ce que** la section d'insertion (46) est reliée à la rainure de réception (34) par adhérence et/ou par complémentarité de forme.

5. Agencement de vitre de véhicule (1) selon l'une quelconque des revendications précédentes, **caractérisé en ce que**, vu dans une coupe transversale appliquée perpendiculairement à une direction d'extension longitudinale de la baguette de protection pour le transport (14), la section d'insertion (46) et la section de contact (48) s'étendent essentiellement transversalement l'une à l'autre.

6. Agencement de vitre de véhicule (1) selon l'une quelconque des revendications précédentes, **caractérisé en ce que** le moyen de liaison (50) comprend une masse adhésive, une bande de film adhésif, un ruban adhésif double face, une ventouse et/ou un élément magnétique.

7. Agencement de vitre de véhicule (1) selon l'une quelconque des revendications précédentes, **caractérisé en ce que** la baguette de protection pour transport (14) présente le moyen de liaison (50).

8. Agencement de vitre de véhicule (1) selon l'une quelconque des revendications précédentes, **caractérisé en ce que** la section d'insertion (46) et/ou la section de contact (48) est ou sont segmentée(s) le long d'une extension longitudinale de la baguette de protection pour le transport (14) et/ou **en ce que** le moyen de liaison (50) est segmenté le long de l'extension longitudinale de la baguette de protection pour le transport (14) et/ou est formé de plusieurs éléments de fixation.

9. Agencement de vitre de véhicule (1) selon l'une quelconque des revendications précédentes, **caractérisé en ce que** la baguette de protection pour le transport (14) comprend une première section de baguette (60) comprenant la section d'insertion (46) et une deuxième section de baguette (62) comprenant la section de contact (48), la première section de baguette (60) étant assemblée à la deuxième section de baguette (62).

10. Agencement de vitre de véhicule (1) selon l'une quelconque des revendications précédentes, lorsqu'elles se rapportent au moins à la revendication 5, **caractérisé en ce que** la baguette de protection pour le transport (14) présente une section de support (68) qui, vue dans la coupe transversale, s'étend dans une direction essentiellement parallèle à la section de contact (48) et/ou au premier côté principal (16) de la vitre de véhicule (10) et détournée de la section de contact (48) par rapport à la section d'insertion (46).

11. Agencement de vitre de véhicule (1) selon la revendication 10, **caractérisé en ce que** la section de support (68) de la baguette de protection pour le transport (14) dépasse la deuxième zone de liaison (30) de la baguette profilée (12) dans une projection sur une ligne de projection (72) orthogonale à la direction d'extension longitudinale de la baguette de protection pour le transport (14) et inclinée d'un angle (β) par rapport au premier côté principal de la vitre de véhicule, l'angle (β) étant inférieur ou égal à 40° en valeur absolue.

12. Agencement de vitre de véhicule (1) selon l'une quelconque des revendications 10 ou 11, **caractérisé en ce que** la section de support (68) entoure et/ou recouvre au moins partiellement la deuxième zone de liaison (30) sur un côté de la deuxième zone de liaison (30) détourné du bord (20) de la vitre de véhicule (10).
